## Europäisches Patentamt

## European Patent Office

## Office européen des brevets

(11) Publication number: **0 124 719**
**B1**

# (12) EUROPEAN PATENT SPECIFICATION

(45) Date of publication of patent specification: **12.08.87**

(21) Application number: **84102580.2**

(22) Date of filing: **09.03.84**

(51) Int. Cl.⁴: **H 02 M 5/45**

(54) **Current-type GTO/inverter.**

(30) Priority: **11.03.83 JP 40096/83**

(43) Date of publication of application:
**14.11.84 Bulletin 84/46**

(45) Publication of the grant of the patent:
**12.08.87 Bulletin 87/33**

(84) Designated Contracting States:
**DE FR GB SE**

(56) References cited:
**GB-A-1 429 880**
**US-A-3 887 862**

**Patent Abstracts of Japan vol. 2, no. 23, 15
February 1978 page 11720E77**

(73) Proprietor: **Kabushiki Kaisha Meidensha
1-17, Ohsaki 2-chome
Shinagawa-ku Tokyo 141 (JP)**

(72) Inventor: **Matsuse, Kohki
5-6-204, Tsurumaki 4-chome
Tama-shi Tokyo (JP)**

(74) Representative: **Dipl.-Phys.Dr. Manitz Dipl.-Ing.,
Dipl.-Wirtsch. Finsterwald Dipl.-Chem.Dr. Heyn
Dipl.-Phys. Rotermund Morgan, B.Sc.(Phys.)
Robert-Koch-Strasse 1
D-8000 München 22 (DE)**

Courier Press, Leamington Spa, England.

## Description

The present invention relates generally to a current type gate turn-off (GTO) thyristor bridge-connected inverter circuit, and to a method of restoring commutation surge voltage energy, and more specifically to a surge voltage clamping circuit for clamping the surge voltage generated when each GTO incorporated in a current type GTO bridge-connected inverter is turned off.

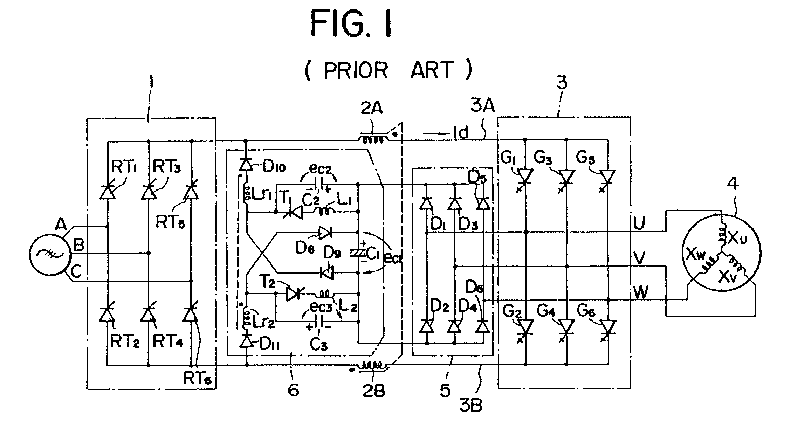

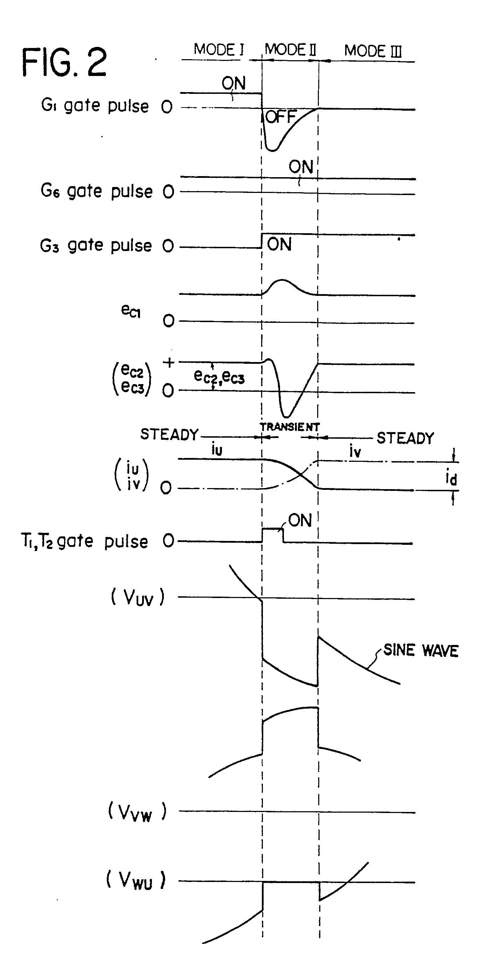

In a known current-type gate turn-off thyristor bridge-connected inverter described later in detail with reference to Figs. 1 and 2 of the accompanying drawings, such as may be used in conjunction with an electric motor, gate turn-off thyristors (hereinafter referred to simply as GTO's) are incorporated in the inverter as the main switching elements. In this arrangement no special commutating circuit including a commutation reactor is required, because the GTO's can be turned from on to off or vice versa in response to a control signal applied to gate terminals thereof. Here, the word "commutation" means that the load current of one phase is switched to that of another phase or vice versa by thyristor switching operation. However, in the abovementioned current-type GTO inverter circuit, in the case where the load is an induction motor having an inductance, commutation surge voltages are inevitably generated whenever each GTO is turned off. The generated surge voltages are superimposed upon the alternating output voltage of the GTO inverter, thus resulting in a problem in that some of the GTO's may be damaged by these commutation surge voltages.

In order to overcome the above problem, a commutation surge voltage clamping circuit has been proposed, by which the commutation surge voltages generated whenever each GTO is turned off are absorbed or stored in a single electrolytic capacitor and thereafter returned to the load side through the GTO inverter for reducing the electric power loss. This function is called energy restoration.

In the conventional commutation surge voltage clamping circuit used for a current type GTO inverter, however, there exist some disadvantages as follows:

(1) Since a pair of ordinary thyristors are used for restoring the stored commutation surge voltage energy to the DC source terminals of the GTO inverter, two vibration circuits or thyristor turning-off circuits including a capacitor and an inductor are necessary. Further, since the surge voltage energy is restored through these capacitors used for the vibration circuits, the capacity of these capacitors of the vibration circuits is determined to be relatively large. As a result, the turn-off operation of the ordinary thyristors often fails at higher frequency range. In other words, it is impossible to stably operate the commutation surge voltage clamping circuit when the GTO inverter operates at a high speed.

(2). Since the commutation surge voltage energy is restored from the electrolytic capacitor to the DC source terminals of the GTO inverter through the vibration capacitors connected in series with the electrolytic capacitor, the capacitance of the restoring circuit is relatively large. Therefore, a reactor having a large inductance is necessary in order to smooth the current restored to the GTO inverter. In other words, the cost of the commutation surge voltage clamping circuit is relatively high.

A more detailed description of the prior art commutation surge voltage clamping circuit will be made later with reference to the aforementioned Figs. 1 and 2.

With these problems in mind, therefore, it is a primary object of the present invention to provide a surge voltage clamping circuit for a current type GTO inverter, and a method of restoring commutation surge voltage energy which can operate stably at high frequency range.

It is the other object of the present invention to provide a surge voltage clamping circuit for a current type GTO inverter in which no vibration circuit for turning off the energy-restoring thyristor is provided, and which avoids the use of a large-inductance reactor, so that the circuit configuration is simplified.

To achieve the abovementioned object there is provided, in accordance with the invention and starting from the prior art of Figs. 1 and 2 a method in accordance with claim 1 and a circuit in accordance with claims 2 and 3. A further development of the circuit of the present invention is set forth in claim 4 and makes it possible to use the new circuitry to restore to the inverter energy which would otherwise be lost during braking of the motor.

The features and advantages of a surge voltage clamping circuit for a current-type GTO inverter according to the present teaching over the prior art clamping circuit will be more clearly appreciated from the following description of the preferred embodiments of the invention taken in conjunction with the accompanying drawings, in which like reference numerals designate the same or similar elements or sections throughout the figures thereof, and in which Figs. 1 and 2 relate to the prior art and Figs. 3 to 5 relate to the present invention, more specifically:

Fig. 1 is a circuit diagram of a prior art surge voltage clamping circuit for a current-type GTO inverter;

Fig. 2 is a timing chart of the prior art surge voltage clamping circuit for a current-type GTO inverter shown in Fig. 1, for assistance in explaining the operation thereof;

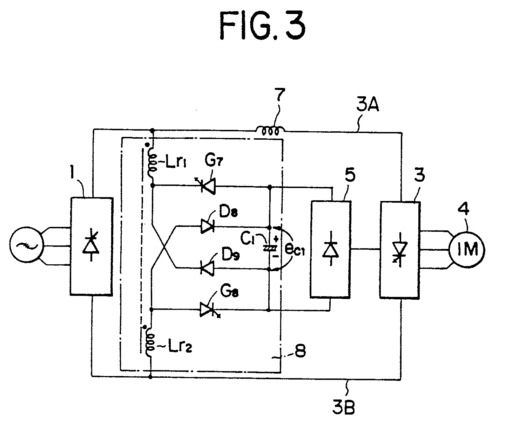

Fig. 3 is a circuit diagram of the surge voltage clamping circuit for a current-type GTO inverter according to the present invention;

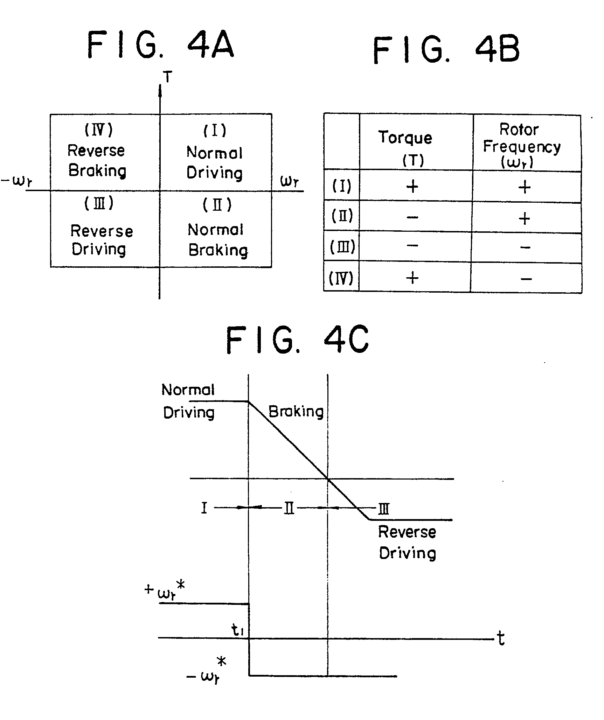

Fig. 4A is a coordinate with rotor angular frequency as abscissa and with rotor torque as ordinate, for assistance in explaining four quadrant operation;

Fig. 4B is a table showing signs of the rotor torque and the rotor angular frequency being classified into four quadrants;

Fig. 4C is a graphical representation showing an example of the four-quadrant operation, in which the motor driving mode is shifted from the first quadrant operation, through the second quadrant operation, to the third quadrant operation when the reference rotor angular frequency is switched from the normal direction to the reverse direction; and

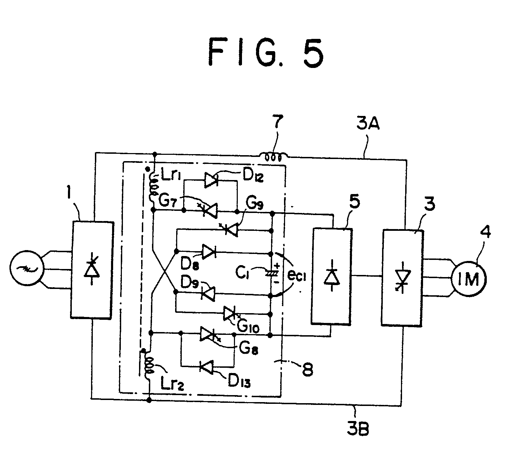

Fig. 5 is a circuit diagram of a second embodiment of the surge voltage clamping circuit for a current-type GTO inverter according to the present invention.

With reference to Fig. 1, the known GTO inverter provided with a surge voltage clamping circuit is roughly made up of a thyristor bridge-connected current rectifier 1, a DC reactor having two inductive reactances 2A and 2B magnetically connected each other, a GTO (gate turn-off thyristor) bridge-connected inverter 3, an induction motor 4, a diode bridge-connected commutation surge voltage rectifier 5, and a commutation surge voltage clamping circuit 6 including an electrolytic capacitor $C_1$. The above clamping circuit 6 functions also as a commutation surge voltage energy restoring circuit.

The thyristor bridge-connected rectifier 1 includes six rectifying thyristors $RT_1$ to $RT_6$, which are turned on sequentially in the order of $RT_1$ and $RT_6$, $RT_3$ and $RT_2$ and $RT_5$ and $RT_4$ so that each half cycle of the sine wave of a three-phase power source can be passed in sequence. Therefore, when the rectifying thyristors $RT_1$ and $RT_6$ are both turned on, a first-phase current is supplied from the terminal A to the terminal C by way of thyristor $RT_1$, reactor 2A, terminal 3A, GTO bridge-connected inverter 3, motor 4, GTO bridge-connected inverter 3, terminal 3B, reactor 2B, and thyristor $RT_6$. Similarly, when the rectifying thyristors $RT_3$ and $RT_2$ are both turned on, a second-phase current is supplied from the terminal B to the terminal A by way of rectifying thyristor $RT_3$, reactor 2A, terminal 3A, GTO bridge-connected inverter 3, motor 4, GTO bridge-connected inverter 3, terminal 3B, reactor 2B and the rectifying thyristor $RT_2$; when the rectifying thyristors $RT_5$ and $RT_4$ are turned on, a third phase current is supplied from the terminal C to the terminal B by way of the rectifying thyristor $RT_5$, reactor 2A, terminal 3A, GTO bridge-connected inverter 3, motor 4, GTO bridge-connected inverter 3, terminal 3B, reactor 2B, and rectifying thyristor $RT_4$. The rectified full-wave direct current is further smoothed through the DC cumulative reactor having two inductances 2A and 2B magnetically connected to each other. Therefore, the smoothed direct current Id is further converted into an alternating current of an appropriate frequency through the GTO inverter 3 to drive the induction motor 4 at any desired speed.

The GTO inverter 3 includes six bridge-connected GTOs $G_1$ to $G_6$. When the GTOs are turned on in the order of $G_1$ and $G_6$ and then $G_3$ with $G_6$ on in sequence for each 60 degrees, an alternating square-wave U-phase current $i_u$ with a pulse

width of 120 degrees is first obtained by the GTO inverter. When the GTOs are turned on in the order of $G_3$ and $G_6$ and then $G_2$, with $G_3$ on in sequence for each 60 degrees, an alternating square-wave V-phase current $i_v$ with a pulse width of 120 degrees is obtained by the GTO inverter. When the GTOs are turned on in the order of $G_3$ and $G_2$ and then $G_5$ with $G_2$ on in sequence for each 60 degrees, an alternating square-wave W-phase current $i_w$ with a pulse width of 120 degrees is obtained by the GTO inverter.

In other words, when GTOs $G_1$ and $G_6$ are turned on, the rectified direct current Id flows as the U-phase current (the latter half of 120 degrees) $i_u$ through the first U-phase winding having reactance $X_u$ and the third W-phase winding having reactance $X_w$ of the motor. When GTO $G_1$ is turned off and GTO $G_3$ is turned on with GTO $G_6$ kept turned on, the current Id flows as the V-phase current (the first half of 120 degrees) $i_v$ through the second V-phase winding having reactance $X_v$ and the third W-phase winding having reactance $X_w$.

Similarly, when $G_6$ is turned off and $G_2$ is turned on with $G_3$ kept turned on, the current Id flows as the V-phase current (the latter half of 120 degrees) $i_v$ through $X_v$ and $X_u$. When $G_3$ is turned off and $G_5$ is turned on with $G_2$ kept turned on, the current Id flows as the W-phase current (the first half of the 120 degrees) $i_w$ through $X_w$ and $X_u$.

In summary, GTOs are turned off in the order of $G_1$, $G_6$, $G_3$, $G_2$, $G_5$ and $G_4$ for each 60 degrees. The current passed through these three-phase windings having motor reactances $X_u$, $X_v$, and $X_w$ generates a rotational magnetic flux.

Whenever each of these three-phase windings is switched off, commutation surge voltages are inevitably generated by the magnetic energy stored in the respective windings. In order to absorb these commutation surge voltages, there is additionally provided a surge voltage clamping circuit including a diode bridge-connected commutation surge voltage rectifying section 5 made up of six diodes $D_1$ to $D_6$ and a surge voltage clamping section 6 made up of an electrolytic capacitor $C_1$, two capacitors $C_2$ and $C_3$, two ordinary thyristors $T_1$ and $T_2$, four diodes $D_8$ to $D_{11}$, two turning-off inductors $L_1$ and $L_2$, and a reactor having two reactances $Lr_1$ and $Lr_2$, as shown in Fig. 1. In the above reactor, the positive side of the first reactance $Lr_1$ is connected to the positive terminal of the DC rectifier 1 through the diode $D_{10}$; the negative side of the second reactance $Lr_2$ is connected to the negative terminal of the DC rectifier through the diode $D_{11}$, respectively.

The operation of the prior-art surge voltage clamping circuit will be described hereinbelow with reference to Figs. 1 and 2.

When mode I ($G_1$ and $G_6$ are on) is switched to mode II ($G_1$ is off, $G_6$ is on, $G_3$ is on), for instance, as depicted in Fig. 2, the current $i_u$ flowing through windings $X_u$ and $X_w$ is commutated to the current $i_v$ flowing through windings $X_v$ and $X_w$. In this transient state, the current $i_u$ does not immediately fall to zero level but decreases gradually

and the current $i_v$ does not immediately rise to the current Id but increases gradually as depicted in Fig. 2. This is because an inductance exists in each winding and thereby an induced surge voltage is inevitably generated across each winding. It is very important to suppress or eliminate these induced surge voltages for protection of the GTO thyristors.

An induced surge voltage $V_{vw}$ developed across the windings $X_v$ and $X_w$ in this transient state can be charged in the capacitor $C_1$ as follows: When the surge voltage $V_{vw}$ exceeds the voltage across the capacitor $C_1$, and since the diodes $D_3$ and $D_6$ are both forward biased (the anode of $D_3$ is high in voltage level; the cathode of $D_6$ is low in voltage level), the major part of the current to be passed through the winding $X_v$ flows by way of GTO $G_3$, diode $D_3$, capacitor $C_1$, diode $D_6$ and GTO $G_6$. In this transient state, the surge voltage $V_{vw}$ is suppressed by the capacitor $C_1$ if the voltage $e_{c1}$ across the capacitor $C_1$ is sufficiently low.

Simultaneously, when an induced surge voltage $V_{uv}$ developed across the windings $X_u$ and $X_v$ in this transient state falls to the voltage $e_{c1}$ of the capacitor $C_1$, and since the diodes $D_3$ and $D_2$ are both forward biased (the cathode of $D_2$ is low in voltage level and anode of $D_3$ is high in voltage level), the commutation energy generated across the windings $X_u$ and $X_v$ is charged into the capacitor $C_1$ by way of GTO $G_3$, diode $D_3$, capacitor $C_1$, diode $D_2$, winding $X_u$, winding $X_w$ and GTO $G_6$. In this transient state, the surge voltage $V_{uv}$ is suppressed by the capacitor $C_1$. As a result, the induced surge voltage $V_{wu}$ developed across the windings $X_w$ and $X_u$ becomes zero as shown in Fig. 2. The current $i_v$ increases gradually up to the direct current Id in accordance with a time constant determined by the circuit constant of the motor load. When the current $i_u$ reaches zero, the diode $D_2$ is cut off. Simultaneously, no induced surge voltage is generated in the winding $X_u$. When the induced surge voltage $V_{vw}$ falls below the capacitor voltage $e_{c1}$, the diodes $D_3$ and $D_6$ are both cut off, so that the capacitor $C_1$ is electrically disconnected from the inverter 3 and thus the commutation from GTO $G_1$ to GTO $G_3$ is completed.

The above-mentioned mode II corresponds to the overlapped (transient) period in a series-connected diode type current inverter. However, there still exists a difference between the GTO inverter shown in Fig. 1 and the series-connected diode type current inverter in that two transient currents flow through the each-phase winding in opposite directions to each other and are superimposed upon each other.

When the charged-up voltage $e_{c1}$ in the capacitor $C_1$ increases to a sufficiently high level, the two reverse blocking ordinary thyristors $T_1$ and $T_2$ are turned on in response to a pulse applied to each gate terminal thereof. Therefore, the surge voltage energy stored in the capacitor $C_1$ is discharged to the DC source terminals 3A and 3B of the GTO inverter 3 by way of inductor $L_1$, thyristor $T_1$, reactor $Lr_1$, diode $D_{10}$, reactor 2A,

GTO inverter 3, motor 4, GTO inverter 3, reactor 2B, diode $D_{11}$, reactor $Lr_2$, thyristor $T_2$, and inductor $L_2$. The above-mentioned discharge is called commutation surge voltage energy restoration or energy rebound. In this initial state of discharge, the capacitors $C_2$ and $C_3$ are also charged up with the polarity as shown in Fig. 1. These two capacitors $C_2$ and $C_3$ form two vibration circuits independently. The first vibration circuit is made up of the capacitor $C_2$ and the inductor $L_1$; the second vibration circuit is made up of the capacitor $C_3$ and the inductor $L_2$, each having a relatively high frequency or a relatively small time constant. An example of the voltage wave form $e_{c2}$ or $e_{c3}$ across the capacitor $C_2$ or $C_3$ is also shown in Fig. 2. When the polarity of the capacitor $C_2$ or $C_3$ of the vibration circuit is reversed, the thyristor $T_1$ or $T_2$ is automatically turned off, because a positive potential is applied to the anode of the thyristor $T_1$ or $T_2$. In this state, it should be noted that the polarities of the charged-up voltages of the three capacitors $C_1$, $C_2$, $C_3$ are the same, that is, three charged-up voltages are added to each other. Therefore, when the addition of these three charged-up voltages exceeds the DC source voltage across the thyristor bridge rectifier 1, the energy stored in these three capacitors $C_1$, $C_2$ and $C_3$ are returned to the DC source terminals 3A and 3B by way of the reactor $Lr_1$, diode 10, reactor 2A, GTO inverter 3, motor 4, GTO inverter 3, reactor 2B, diode $D_{11}$ and the reactor $Lr_2$. In this energy restoration operation, since the inductance $Lr_1$ or $Lr_2$ of the reactor is so determined as to be sufficiently greater than that of the turning-off (vibration) inductor $L_1$ or $L_2$, the two vibration circuits $L_1 \cdot C_2$ and $L_2 \cdot C_3$ can vibrate stably and provide a sufficient turn-off time for the thyristor $T_1$ or $T_2$. In other words, the reactor $Lr_1$ or $Lr_2$ functions as a smoothing element. After the surge voltage energy has been discharged, the capacitors $C_2$ and $C_3$ are charged again in the direction as shown in Fig. 1, to the voltage level roughly the same as the voltage $e_{c1}$ across the capacitor $C_1$, because three capacitors $C_1$, $C_2$, and $C_3$ are connected in series.

In this state, since the capacitance of capacitor $C_1$ is determined to be sufficiently great as compared with that of the capacitors $C_2$ or $C_3$, after the capacitors $C_2$ and $C_3$ have been charged up, the magnetic energy stored in the reactor $Lr_1$ or $Lr_2$ is recharged into the capacitor $C_1$ by way of diode $D_{11}$, reactor $Lr_2$, diode $D_8$, capacitor $C_1$, diode $D_9$, reactor $Lr_1$ and diode $D_{10}$. This energy is unavailable reactive power by nature. After the reactor energy has been recharged into the capacitor $C_1$, the two diodes $D_{10}$ and $D_{11}$ are both returned to the off state, that is, to the initial conditions. Therefore, the electric discharge of the capacitor $C_2$ or $C_3$ is prevented for being ready for the succeeding commutation of the GTO bridge-connected inverter 3. After the GTO $G_1$ has been turned off and the GTO $G_3$ has been turned on, that is, the commutation has been completed from $G_1$ to $G_3$, the operation mode shifts to the mode III in which the driving current is supplied

from GTO $G_3$, through windings $X_v$ and $X_w$, to GTO $G_6$.

In the prior-art surge voltage clamping circuit for a current-type GTO inverter described above, however, there exist some disadvantages as follows:

(1) The turning-off inductors $L_1$ and $L_2$ and the turning-off capacitors $C_1$ and $C_2$ are required for forming two vibration circuits in order to turn off the ordinary thyristors $T_1$ and $T_2$ after the surge voltage energy stored in the capacitor $C_1$ has been restored to the DC source terminals of the GTO inverter 3. Additionally, the commutation energy is restored to the GTO inverter 3 mainly through the capacitors $C_2$ and $C_3$. Therefore, in order to sufficiently restore the stored surge voltage energy even under a heavy load, the capacitance of $C_2$ or $C_3$ should be relatively large. When capacitors having a large capacitance are used, the vibration frequency becomes low, thus resulting in turn-off failure of the ordinary thyristors $T_1$ and $T_2$. In other words, it is impossible to stably operate the surge voltage clamping circuit at a high frequency range when a heavy load is applied to the induction motor.

(2) Since the added charged-up voltage of the series-connected capacitors $C_1$, $C_2$, and $C_3$ is restored to the GTO inverter 3 through the cumulative reactor having reactances $Lr_1$ and $Lr_2$, a large inductance is required for this reactor. Otherwise, current overshoot may be generated. In other words, the reactors $Lr_1$ and $Lr_2$ are relatively expensive.

In view of the above description, reference is now made to an embodiment of a surge voltage clamping circuit for a current-type GTO inverter according to the present invention with reference to Fig. 3. In this embodiment, GTOs are incorporated in the surge voltage clamping circuit, without providing turning-off (vibration) circuit, in order to operate the circuit stably at a high speed.

In Fig. 3, the points different from the prior-art surge voltage clamping circuit shown in Fig. 1 are that (1) a single direct-current reactor 7 is incorporated in place of the cumulative direct-current reactors 2A and 2B and (2) two gate turn-off thyristors (GTOs) $G_7$ and $G_8$ are incorporated without providing the vibration circuits including two inductors $L_1$ and $L_2$ and capacitors $C_2$ and $C_3$.

A surge voltage clamping circuit 8 or a surge energy restoring circuit according to the present invention comprises an electrolytic capacitor $C_1$ for absorbing the commutation surge voltage energy, two GTOs $G_7$ and $G_8$ for restoring the surge voltage energy stored in the capacitor $C_1$ to the GTO inverter 3, a cumulative reactor having two inductive reactances $Lr_1$ and $Lr_2$ magnetically connected to each other for smoothing the current restored from the capacitor $C_1$ to the GTO inverter 3, and two diodes $D_8$ and $D_9$ for passing the magnetic energy stored in the reactor $Lr_1$, $Lr_2$ to the capacitor $C_1$ after the surge voltage energy stored in the capacitor $C_1$ has been restored.

The electrolytic capacitor $C_1$ is connected in parallel with the diode bridge-connected commutation surge voltage rectifier 5. The two GTOs are connected between the reactor $Lr_1$ and $Lr_2$ and the capacitor $C_1$ as follows: The positive side of the first winding $Lr_1$ is connected to the positive terminal of the DC source; the negative side of the first winding $Lr_1$ is connected to the cathode of the first GTO $G_7$; the anode of the first GTO $G_7$ is connected to the positive side of the capacitor $C_1$; the negative side of the second winding $Lr_2$ is connected to the negative terminal of the DC source; the positive side of the second winding $Lr_2$ is connected to the anode of the second GTO $G_8$; the cathode of the second GTO $G_8$ is connected to the negative side of the capacitor $C_1$.

Further, the two diodes $D_8$ and $D_9$ are connected between the reactor windings $Lr_1$ and $Lr_2$ and the capacitor $C_1$ as follows: the cathode of the first diode $D_8$ is connected to the positive side of the capacitor $C_1$; the anode of the first diode $D_8$ is connected to the positive side of the second winding $Lr_2$; the cathode of the second diode $D_9$ is connected to the negative side of the first winding $Lr_1$ and the anode of the second diode $D_9$ is connected to the negative side of the capacitor $C_1$.

The GTOs $G_7$ and $G_8$ are turned on when the voltage $e_{c1}$ developed across the capacitor $C_1$ exceeds a predetermined value beyond the DC source voltage developed across the thyristor bridge rectifier 1. Therefore, the GTOs $G_7$ and $G_8$ are not turned on whenever the GTO inverter 3 is commutated, being different from the prior-art surge voltage clamping circuit shown in Fig. 1. In other words, the energy stored in the capacitor $C_1$ is restored or regenerated without synchronization with the commutation of the GTO inverter 3.

The operation of the surge voltage clamping circuit 8 according to the present invention will be described hereinbelow. When surge voltage is generated by the commutation of the GTO inverter 3, the surge voltage energy is charged into the electrolytic capacitor $C_1$ through the diode bridge rectifier 5 with the polarity as shown in Fig. 3. If the voltage level of the capacitor $C_1$ exceeds a predetermined value beyond the DC voltage of the thyristor bridge rectifier 1, the GTOs $G_7$ and $G_8$ are turned on by a gate circuit (not shown). Therefore, the surge voltage energy stored in the capacitor $C_1$ is restored to the DC source terminals 3A and 3B of the GTO inverter 3 by way of GTO $G_7$, first winding $Lr_1$, DC reactor 7, GTO inverter 3, motor 4, GTO inverter 3, second winding $Lr_2$, and GTO $G_8$. When the voltage level of the capacitor $C_1$ drops to a predetermined value below the DC voltage of the thyristor bridge rectifier 1 due to this energy restoration, the gate circuit turns off the GTOs $G_7$ and $G_8$ simultaneously. Then, the magnetic energy stored in the first and second windings $Lr_1$ and $Lr_2$ is supplied to the capacitor $C_1$ to charge it by way of second winding $Lr_2$, diode $D_8$, capacitor $C_1$, diode $D_9$ and first winding $Lr_1$ in the forward direction of the two diodes $D_8$ and $D_9$.

The surge voltage clamping circuit 8 according to the present invention has the following features:

(1) The circuit configuration is markedly simplified as compared with the prior-art circuit shown in Fig. 1. That is to say, the diodes $D_{10}$ and $D_{11}$, inductors $L_1$ and $L_2$, capacitors $C_1$ and $C_2$ shown in Fig. 1 are unnecessary. The diodes $D_{10}$ and $D_{11}$ are used to prevent the capacitors $C_2$ and $C_3$ from being reverse charged by the DC voltage of the rectifier 1. Since no capacitors $C_2$ and $C_3$ are provided, no diodes $D_{10}$ and $D_{11}$ are required. However, if the reverse blocking voltage of the GTOs $G_7$ and $G_8$ is insufficient because of a high DC source voltage, it is preferable to provide diodes at the same positions.

(2) The circuit operates stably when driving an induction motor at a high speed. Since two GTOs $G_7$ and $G_8$ are employed in order to eliminate the need of turning-off (vibration) circuits to turn off the ordinary thyristors $T_1$ and $T_2$, there exists no unstable operation caused by the vibration circuit even at high frequency range.

(3) The cost of the circuit is reduced because an ordinary DC reactor 7 can be used in place of the cumulative DC reactors 2A and 2B. In the case of the prior-art circuit, the instant the thyristors $T_1$ and $T_2$ are turned off, the energy stored in the three series-connected capacitors $C_1$, $C_2$ and $C_3$ is discharged to the GTO inverter. Therefore, a sharp transient current is supplied to the DC source terminals of the GTO inverter 3. In order to suppress such a peak current as described above, the reactor having a large inductance is required. In the circuit of the present invention, since the energy stored in the capacitor $C_1$ is discharged frequently through the GTOs $G_7$ and $G_8$ whenever the voltage charged up in the capacitor $C_1$ exceeds the DC source voltage, no sharp peak current is generated and therefore no expensive reactors $Lr_1$ and $Lr_2$ having a great inductance are required.

As described above, it is possible to stabilize the circuit operation at high frequency range and to simplify the circuit configuration or to reduce the circuit cost in the surge voltage clamping circuit for a current-type GTO inverter according to the present invention, since the GTOs are turned on to restore the surge voltage energy stored in an electrolytic capacitor to the DC source terminals of the GTO inverter, only when the voltage of the capacitor exceeds a predetermined value beyond the DC source voltage.

Reference is now made to the second embodiment of the present invention. In order to drive an induction motor in the same manner as in a DC motor, four-quadrant operation is indispensable. This four-quadrant operation will be described hereinbelow. As depicted in Fig. 4A, when the rotor angular frequency $\omega_r$ is taken as abscissa and the motor torque T is taken as ordinate, the first quadrant indicates that a motor is driven in the normal rotational direction; the second quadrant indicates that the motor is braked while rotating in the normal direction; the third quadrant indicates that the motor is driven in the reverse rotational direction; the fourth quadrant indicates that the motor is braked while rotating in the reverse direction.

In other words, in the first quadrant, the motor torque T is positive and the rotor angular frequency $\omega_r$ is also positive; in the second quadrant, T is negative but $\omega_r$ is positive; in the third quadrant, T is negative and $\omega_r$ is also negative; in the fourth quadrant, T is positive but $\omega_r$ is negative, as depicted in Fig. 4B.

Fig. 4C shows an example in which a motor rotating in the normal direction is switched to the reverse direction at time $t_1$. In more detail, when a motor is rotating in the 1st quadrant operation (T>0, $\omega_r$>0), if the reference frequency (speed) $+\omega^*_r$ is switched to $-\omega^*_r$, the motor rotates in the 2nd quadrant operation (T<0, $\omega_r$>0) (the motor is braked or the motor torque is absorbed). The instant the rotor frequency reaches zero, the motor begins to rotate in the 3rd quadrant operation (t<0, $\omega_r$<0) (the motor is driven in the reverse direction).

Further, in the above description, it should be noted that while the induction motor is being braked for stopping the motor or for reversing the rotational direction of the motor, the induction motor operates as a generator which can return the motor rotational kinetic energy to the AC source side.

In the second embodiment shown in Fig. 5, therefore, a first pair of GTOs 7 and 8 are used for restoring the load inductive power (magnetic energy) to the DC source terminals of the GTO inverter 3 as in the first embodiment shown in Fig. 3 and a second pair of GTOs 9 and 10 are additionally used for regenerating the motor kinetic energy produced in motor braking operation to the AC source side.

With reference to Fig. 5, the electrolytic capacitor $C_1$ is connected in parallel with the diode bridge-connected communication surge voltage rectifier 5 as in the first embodiment shown in Fig. 3. An additional pair of GTOs $G_9$ and $G_{10}$ for regenerating the motor rotational energy produced in motor braking operation to the AC source side are connected between the reactor $Lr_1$ and $Lr_2$ and the capacitor $C_1$ as follows: the anode of the third GTO $G_9$ is connected to the positive side of the capacitor $C_1$; the cathode of the third GTO $G_9$ is connected to the positive side of the second winding $Lr_2$, the anode of the fourth GTO $G_{10}$ is connected to the negative side of the first winding $Lr_1$; the cathode of the fourth GTO $G_{10}$ is connected to the negative side of the capacitor $C_1$.

Further, an additional pair of diodes $D_{12}$ and $D_{13}$ are connected between the reactor $Lr_1$ and $Lr_2$ and the capacitor $C_1$ as follows: the anode of the third diode $D_{12}$ is connected to the negative side of the first winding $Lr_1$; the cathode of the third diode $D_{12}$ is connected to the positive side of the capacitor $C_1$; the anode of the fourth diode $D_{13}$ is connected to the negative side of the capacitor $C_1$; and the cathode of the fourth diode $D_{13}$ is connected to the positive side of the second winding $Lr_2$.

In order to distinguish between the four GTOs and diodes, the following description will be used hereinafter: the GTOs $G_7$ and $G_8$ are referred to as in-drive energy restoring GTOs; the GTOs $G_9$ and $G_{10}$ are referred to as in-brake energy regenerating

GTOs; the diodes $D_8$ and $D_9$ are referred to as in-drive energy restoring diodes; the diodes $D_{12}$ and $D_{13}$ are referred to as in-brake energy regenerating diodes.

As already described with reference to Fig. 2, when the GTO $G_1$ is turned off and the GTO $G_3$ is turned on with the GTO $G_6$ kept turned on, the current $i_v$ cannot rise immediately and the current $i_u$ cannot fall to zero immediately because a commutation surge voltage is developed. The time interval within which two currents $i_u$ and $i_v$ overlap each other corresponds to a transient state. The time interval within which a single current $i_u$ or $i_v$ exists corresponds to a steady state.

The above-mentioned energy restoring GTOs $G_7$ and $G_8$ and energy regenerating GTOs $G_9$ and $G_{10}$ are turned on only in the steady state but turned off in the transient state, in response to each gate signal generated by each gate circuit (not shown), in order to realize the energy restoration or regeneration function.

The operation of the second embodiment of a surge voltage clamping circuit for a current-type GTO inverter according to the present invention will be described hereinbelow.

(1) Surge energy restoration in motor-driving operation:

Since the GTOs $G_7$, $G_8$ and $G_9$, $G_{10}$ are all turned off in the transient state interval (commutation period), the surge voltage energy is charged into the capacitor $C_1$ from the inverter 3 through the diode bridge-connected rectifier 5. When the energy restoring GTOs $G_7$ and $G_8$ are turned on in the steady state interval, the energy stored in the capacitor $C_1$ is discharged (restored) to the DC source terminals 3A and 3B of the GTO inverter 3 by way of capacitor $C_1$, GTO $G_7$, reactor $Lr_1$, reactor 7, GTO inverter 3, motor 4, GTO inverter 3, reactor $Lr_2$, GTO $G_8$, and capacitor $C_1$.

Further, since the two GTOs $G_7$ and $G_8$ are kept turned off in the transient state interval, the magnetic energy stored in the reactor $Lr_1$, $Lr_2$ is recharged into the capacitor $C_1$ by way of reactor $Lr_2$, diode $D_8$, capacitor $C_1$, diode $D_9$, reactor $Lr_1$ as in the first embodiment shown in Fig. 3. The current flows through the reactor Lr in a predetermined direction.

(2) Motor kinetic energy regeneration in motor-braking operation:

When the induction motor is stopped or reversed, the frequency of the inverter current is lowered; that is, each phase of gate signals applied to the gate terminals of the GTO inverter 3 is delayed from the motor speed. As a result, the polarity of the voltage generated from the inverter 3 is reversed. In other words, the direction of the current flowing through the reactor Lr is reversed. However, the polarity of the capacity $C_1$ should be kept in a predetermined direction. When the magnetic energy of the cumulative reactor $Lr_1$, $Lr_2$ flows into the capacitor $C_1$ in the transient state by way of reactor $Lr_2$, diode $D_8$, capacitor $C_1$, diode $D_9$, reactor $Lr_1$, the energy regenerating GTOs $G_9$, $G_{10}$ are both reversely biased by the diodes $D_8$ and $D_9$. Under these conditions, these GTOs will not be turned on even if a gate signal is applied to each of the gate terminals thereof. However, after the current supplied from the reactor $Lr_1$ and $Lr_2$ to the capacitor $C_1$ has decreased to near zero, the energy regenerating GTOs $G_9$, $G_{10}$ can be turned on, so that the energy charged in the capacitor $C_1$ is regenerated to the AC source side by way of capacitor $C_1$, GTO $G_9$, reactor $Lr_2$, the thyristor bridge-connected current rectifier 1, reactor $Lr_1$, GTO $G_{10}$ and capacitor $C_1$. In this state, since the voltage $C_1$ is high, the diodes $D_{12}$ and $D_{13}$ are reversely biased. In the same manner as in the motor driving operation, the GTOs $G_9$, $G_{10}$ are turned on in the steady state interval and off in the transient state interval. However, since the regeneration energy in motor braking operation becomes great in a moment and therefore the capacitor $C_1$ is immediately charged up, it is preferable to predetermine the discharge time interval of the capacitor $C_1$ to be long without distinction of the transient state interval and the steady state interval. That is to say, it is preferable to turn on the GTO's $G_9$ and $G_{10}$ whenever the voltage $e_{c1}$ across the capacitor $C_1$ exceeds a predetermined reference value. Further, when the GTOs $G_9$, $G_{10}$ are turned off, the magnetic energy stored in the reactor Lr is recharged into the capacitor $C_1$ by way of reactor $Lr_1$, diode $D_{12}$, capacitor $C_1$, diode $D_{13}$, and reactor $Lr_2$. The above-mentioned operations are repeated.

As described above, the surge voltage clamping circuit of the present invention has a first function of absorbing the surge voltage energy generated in the transient state interval (commutation period), a second function of restoring the surge voltage energy to the DC source terminal of the GTO inverter in the steady state interval, and a third function of regenerating the motor kinetic energy to the AC source side in the braking interval.

Further, the above surge voltage absorbing function is greatly dependent upon the voltage $e_{c1}$ developed across the capacitor $C_1$. This voltage $e_{c1}$ can be controlled by changing the off-time interval of the GTOs $G_7$ and $G_8$. If the DC source voltage and the frequency of the GTO inverter 3 are determined to be constant, the longer the off-time interval of $G_7$ and $G_8$ is, the higher will be the voltage $e_{c1}$ because the discharge interval of capacitor $C_1$ decreases. If the DC source voltage and the off-time interval are determined to be constant, the higher the frequency of the inverter 3, the higher will be the voltage $e_{c1}$ because the surge energy for a predetermined time interval increases.

As understood above, since the off-time interval of GTOs $G_7$ and $G_8$ exerts a serious influence upon the effect of surge voltage energy absorption, that is, since the energy absorption effect is lowered when the voltage $e_{c1}$ increases, it is very important to determine this off-state interval of the GTOs $G_7$ and $G_8$.

As described above, in the second embodiment of the surge voltage clamping circuit for a current-type GTO inverter according to the present invention, since there is provided an additional function to regenerate the motor kinetic energy to the AC source side when the motor is being braked, it is possible to further improve the energy transduction efficiency of a current-type GTO inverter and additionally to readily drive or brake an induction motor in order to enable the four-quadrant operation.

**Claims**

1. A method of restoring a commutation surge voltage energy generated whenever each thyristor of a GTO bridge-connected inverter (3) energised by a DC source voltage is turned off, comprising the following steps of:

a) rectifying the commutation surge voltage generated when each thyristor is turned off;

b) storing the rectified commutation surge voltage energy in a capacitor $(C_1)$;

c) restoring a stored commutation surge voltage energy to the direct current source terminals (3A, 3B) of said inverter through a DC reactor $(Lr_1, Lr_2)$,

d) recharging a magnetic energy stored in the reactor $(Lr_1, Lr_2)$ to the capacitor $(C_1)$ through diodes $(D_8, D_9)$,
characterised by:

e) comparing the stored commutation surge voltage with said DC source voltage,

f) restoring the stored commutation surge voltage energy through gate turn-off thyristors $(G_7, G_8)$ if the stored commutation surge voltage exceeds a predetermined value beyond said DC source voltage,

g) recharging the stored magnetic energy if the stored commutation surge voltage drops to the predetermined value below said DC source voltage.

2. A current type gate turn-off (GTO) thyristor bridge-connected inverter circuit for driving an induction motor, comprising:

a) a thyristor bridge-connected rectifier (1) for forming a DC source voltage for said inverter (3);

b) a diode bridge connected commutation surge voltage rectifier (5) connected to said GTO bridge-connected inverter (3);

c) a capacitor $(C_1)$ connected to said diode brige-connected commutation surge voltage rectifier (5) for storing a commutation surge voltage energy generated when each of the thyristors of said GTO bridge-connected inverter (3) is turned off;

d) a cumulative reactor $(Lr_1, Lr_2)$ having a first winding $(Lr_1)$ a positive side of which is connected to a positive terminal of said inverter and second winding $(Lr_2)$ a negative side of which is connected to a negative terminal of said inverter;

e) a first diode $(D_8)$ an anode of which is connected to the positive side of the second winding $(Lr_2)$ of said reactor $(Lr_1, Lr_2)$ and a cathode of which is connected to the positive side of said capacitor $(C_1)$; and

f) a second diode $(D_9)$ an anode of which is connected to the negative side of said capacitor $(C_1)$ and a cathode of which is connected to the negative side of the first winding $(Lr_1)$ of said reactor $(Lr_1, Lr_2)$,

—whereby the commutation surge voltage energy stored in said capacitor $(C_1)$ is restored periodically to the direct current terminals (3A, 3B) of said inverter (3) and

—whereby the magnetic energy stored in the first and second windings of said reactor $(Lr_1, Lr_2)$ is recharged to said capacitor $(C_1)$ through said first and second diodes $(D_8, D_9)$ after each step of restoring commutation surge voltage energy, characterized by:

g) a first gate turn-off thyristor $(G_7)$ a cathode of which is connected to a negative side of the first winding $(Lr_1)$ of said reactor $(Lr_1, Lr_2)$ and an anode of which is connected to a positive side of said capacitor $(C_1)$, said first gate turn-off thyristor $(G_7)$ being turned on while the voltage charged in said capacitor $(C_1)$ exceeds a predetermined value beyond said DC source voltage; and

h) a second gate turn-off thyristor $(G_8)$ a cathode of which is connected to a negative side of said capacitor $(C_1)$ and an anode of which is connected to a positive side of the second winding $(Lr_2)$ of said reactor $(Lr_1, Lr_2)$, said second gate turn-off thyristor $(G_8)$ being turned on while a voltage charged in said capacitor $(C_1)$ exceeds a predetermined value beyond said DC source voltage;

whereby the commutation surge voltage energy stored in said capacitor $(C_1)$ is restored through said first and second gate turn-off thyristors $(G_7, G_8)$ when the charged-up capacitor voltage exceeds a predetermined value beyond said DC source voltage, and further the magnetic energy stored in the first and second windings $(Lr_1, Lr_2)$ of said reactor $(Lr_1, Lr_2)$ is recharged after said first and second gate turn-off thyristors $(G_7, G_8$ have been turned off.

3. A current type gate turn-off (GTO) thyristor bridge-connected inverter circuit in accordance with claim 2, wherein DC reactor means is connected between said rectifier (1) and said inverter (3),
characterised by:

i) the DC reactor being a single reactor.

4. A current type gate turn-off (GTO) thyristor bridge-connected inverter circuit for driving an induction motor in accordance with either claim 2 or claim 3,
characterised by:

j) said first gate turn-off thyristor $(G_7)$ being turned on during steady state intervals of inverter commutation and off during transient state intervals of inverter commutation;

k) said second gate turn-off thyristor $(G_8)$ being turned on during steady state intervals of inverter commutation and off during transient state intervals of inverter commutation;

l) a third gate turn-off thyristor $(G_9)$ an anode of which is connected to the positive side of said capacitor $(C_1)$ and a cathode of which is connected to the positive side of said second winding (Lr₂) of said reactor (Lr₁, Lr₂), said third gate turn-off thyristor (G₉) being turned on while the voltage charged in said capacitor (C₁) exceeds a predetermined value;

m) a fourth gate turn-off thyristor (G₁₀) an anode of which is connected to the negative side of said first winding (Lr₁) of said reactor (Lr₁, Lr₂) and a cathode side of which is connected to the negative side of said capacitor (C₁), said fourth gate turn-off thyristor (G₁₀) being turned on while the voltage charged in said capacitor (C₁) exceeds a predetermined value;

n) a third diode (D₁₂) an anode of which is connected to the negative side of said first winding (Lr₁) of said reactor (Lr₁, Lr₂) and a cathode of which is connected to the positive side of said capacitor (C₁); and

o) a fourth diode (D₁₃) an anode of which is connected to the negative side of said capacitor (C₁) and a cathode of which is connected to the positive side of said second winding (Lr₂) of said reactor (Lr₁, Lr₂),

—whereby the commutation surge voltage energy stored in said capacitor (C₁) in motor-braking operation is regenerated to AC source side of said inverter (3) through said third and fourth gate turn-off thyristors (G₉, G₁₀) when the voltage across said capacitor (C₁) exceeds a predetermined value, and magnetic energy stored in said reactor (Lr₁, Lr₂) in motor-braking operation is recharged to said capacitor (C₁) through said third and fourth diodes (D₁₂, D₁₃) after the said third and fourth gate turn-off thyristors (G₉, G₁₀) have been turned off.

**Patentansprüche**

1. Verfahren zum Rückgewinnen einer Abschalt-Spannungsstoßenergie, die jedesmal erzeugt wird, wenn ein Thyristor eines in Brückenschaltung verbundenen, durch eine Gleichspannungsquelle beaufschlagten Inverters (3) mit abschaltbaren Thyristoren abgeschaltet wird, mit folgenden Schritten:

a) Gleichrichten der bei dem Abschalten jedes Thyrcstors erzeugten Umschalt-Stoßspannung;

b) Speichern der gleichgerichteten Umschalt-Stoßspannungsenergie in einem Kondensator (C₁);

c) Zurückführen einer gespeicherten Abschalt-Spannungstoßenergie an die Gleichspannungs-Quellenklemmen (3A, 3B) des Inverters durch einen Gleichstrom-Reaktor (Lr₁, Lr₂),

d) Rückführen einer in dem Reaktor (Lr₁, Lr₂) gespeicherten Magnetenergie zu dem Kondensator (C₁) durch Dioden (D₈, D₉), gekennzeichnet durch:

e) Vergleichen der gespeicherten Abschalt-Stoßspannung mit der Gleich-Quellenspannung,

f) Rückführen der gespeicherten Abschalt-Stoßspannungsenergie durch über den Steueranschluß abschaltende Thyristoren (G₇, G₈), falls die gespeicherte Abschalt-Stoßspannung einen vorbestimmten Wert über der Gleich-Quellenspannung überschreitet,

g) Rückführender gespeicherten magnetischen Energie, falls die gespeicherte Abschalt-Stoßspannung unter den vorbestimmten Wert unter der Gleich-Quellenspannung abfällt.

2. Inverterschaltung mit Stromtyp-Steuerklemmenabschaltthyristoren (GTO), die in Brückenschaltungen verbunden sind zum Ansteuern eines Induktionsmotors mit:

a) einem aus in Brückenschaltung verbundenen Thyristoren gebildeten Gleichrichter (1) zur Bildung einer Gleich-Quellenspannung für den Inverter (3);

b) einem Umschalt-Stoßspannungsgleichrichter (5) mit Dioden in Brückenschaltung, der an den GTO-Inverter (3) in Brückenschaltung angeschlossen ist;

c) einem Kondensator (C₁), der mit dem Umschalt-Stoßspannungsgleichrichter (5) mit Dioden in Brückenschaltung verbunden ist zum Speichern einer Umschalt-Stoßspannungsenergie, die erzeugt wird, wenn jeder Thyristor des GTO-Brückenschaltungs-Inverters (3) abgeschaltet wird;

d) einem kumulativen Reaktor (Lr₁, Lr₂) mit einer ersten Wicklung (Lr₁), von der eine positive Seite mit einer positiven Klemmen des Inverters verbunden ist, und einer zweiten Wicklung (Lr₂), von der eine negative Seite mit einer negativen Klemmen des Inverters verbunden ist;

e) einer ersten Diode (D₈), deren Anode mit der positiven Seite der zweiten Wicklung (Lr₂) des Reaktors (Lr₁, Lr₂) und deren Kathode mit der positiven Seite des Kondensators (C₁) verbunden ist; und

f) einer zweiten Diode (D₉), deren Anode mit der negativen Seite des Kondensators (C₁) verbunden ist und deren Kathode mit der negativen Seite der ersten Wicklung (Lr₁) des Reaktors (Lr₁, Lr₂) verbunden ist,

—wodurch die in dem Kondensator (C₁) gespeicherte Umschalt-Stoßspannungsenergie periodisch den Gleichstrom-Klemmen (3A, 3B) des Inverters (3) zurückgeführt wird, und

—wodurch die in der ersten und der zweiten Wicklung des Reaktors (Lr₁, Lr₂) gespeicherte magnetische Energie durch die erste und die zweite Diode (D₈, D₉) nach jedem Rückführungs-schritt der Umschalt-Stoßspannungsenergie zurückgeladen wird, gekennzeichnet durch

g) einen ersten Steuerklemmen-Abschaltthyristor (G₇), dessen Kathode mit der negativen Seite der ersten Wicklung (Lr₁) des Reaktors (Lr₁, Lr₂) und dessen Anode mit der positiven Seite des Kondensators (C₁) verbunden ist, wobei der erste Steuerelektroden-Abschaltthyristor (G₇) angeschaltet wird, während die in den Kondensator (C₁) geladene Spannung einen vorbestimmten Wert über der Gleich-Quellenspannung überschreitet; und

h) einen zweiten Steuerklemmen-Abschaltthyristor (G₈), dessen Kathode mit der negativen Seite des Kondensators (C₁) und dessen Anode mit der positiven Seite der zweiten Wicklung (Lr₂) des Reaktors (Lr₁, Lr₂) verbunden ist, wobei der zweite

Steuerelektroden-Abschaltthyristor (G₈) angeschaltet ist, während eine in den Kondensator (C₁) geladene Spannung einen vorbestimmten Wert über der Gleich-Quellenspannung überschreitet;

wodurch eine in dem Kondensator (C₁) gespeicherte Umschalt-Spannungsstoßenergie durch den ersten und den zweiten Steuerklemmen-Abschaltthyristor (G₇, G₈) zurückgeführt wird, wenn die aufgeladene Kondensatorspannung einen vorbestimmten Wert über der Gleich-Quellenspannung überschreitet, und weiter die in der ersten und der zweiten Wicklung (Lr₁, Lr₂) des Reaktors (Lr₁, Lr₂) gespeicherte magnetische Energie rückgeladen wird, nachdem der erste und der zweite Steuerklemmen-Abschaltthyristor (G₇, G₈) abgeschaltet wurden.

3. Inverterschaltung mit Stromtyp-Steuerklemmenabschalt-(GTO)-Thyristoren in Brückenschaltung nach Anspruch 2, bei der Gleichstrom-Reaktormittel zwischen dem Gleichrichter (1) und dem Inverter (3) verschaltet ist,
dadurch gekennzeichnet, daß

i) der Gleichstrom-Reaktor ein einziger Reaktor ist.

4. Inverterschaltung mit Stromtyp-Steuerklemmenabschalt-(GTO)-Thyristoren in Brückenschaltung zum Ansteuern eines Induktionsmotors, nach einem der Ansprüche 2 oder 3,
dadurch gekennzeichnet, daß:

j) der erste Steuerklemmen-Abschaltthyristor (G₇) während Gleichgewichtszustands-Intervallen der Inverter-Umschaltung angeschaltet und während Übergangszustands-Intervallen der Inverterumschaltung abgeschaltet ist;

k) der zweite Steuerklemmen-Abschaltthyristor (G₈) während Gleichgewichtszustands-Intervallen der Inverter-Umschaltung angeschaltet und während Übergangszustands-Intervallen der Inverterumschaltung abgeschaltet ist;

l) daß ein dritter Steuerklemmen-Abschaltthyristor (G₉) vorgesehen ist, dessen Anode mit der positiven Seite des Kondensators (C₁) und dessen Kathode mit der positiven Seite der zweiten Wicklung (Lr₂) des Reaktors (Lr₁, Lr₂) verbunden ist, wobei der dritte Steuerklemmen-Abschaltthyristor (C₉) angeschaltet ist, während die in den Kondensator (C₁) geladene Spannung einen vorbestimmten Wert übertrifft;

m) daß ein vierter Steuerklemmen-Abschaltthyristor (G₁₀) vorgesehen ist, dessen Anode mit der negativen Seite der ersten Wicklung (Lr₁) des Reaktors (Lr₁, Lr₂) verbunden ist und dessen Kathode mit der negativen Seite des Kondensators (C₁) verbunden ist, wobei der vierte Steuerklemmen-Abschaltthyristor (G₁₀) angeschaltet ist, während die in den Kondensator (C₁) geladene Spannung einen vorbestimmten Wert übersteigt;

n) daß eine dritte Diode (D₁₂) vorgesehen ist, deren Anode mit der negativen Seite der ersten Wicklung (Lr₁) des Reaktors (Lr₁, Lr₂) verbunden und deren Kathode mit der positiven Seite des Kondensators (C₁) verbunden ist; und

o) daß eine vierte Diode (D₁₃) vorgesehen ist, deren Anode mit der negativen Seite des Kondensators (C₁) und deren Kathode mit der positiven Seite der zweiten Wicklung (Lr₂) des Reaktors (Lr₁, Lr₂) verbunden ist,

—wodurch die in dem Kondensator (C₁) bei Motorbremsbetrieb gespeicherte Umschalt-Stoßspannungsenergie zu der Wechselspannungs-Quellenseite des Inverters (3) durch den dritten und den vierten Steuerklemmen-Abschaltthyristor (G₉, G₁₀) zurückgewonnen wird, wenn die Spannung über dem Kondensator (C₁) einen vorbestimmten Wert übersteigt, und in dem Reaktor (Lr₁, Lr₂) beim Motorbremsbetrieb gespeicherte Magnetenergie durch die dritte und vierte Diode (D₁₂, D₁₃) zu dem Kondensator (C₁) zurückgeführt wird, nachdem der dritte und der vierte Steuerklemmen-Abschaltthyristor (G₉, G₁₀) abgeschaltet sind.

**Revendications**

1. Procédé de restitution d'une énergie de surtension de commutation développée chaque fois qu'un thyristor d'un onduleur (3) connecté en pont à GTO, alimenté par une source de tension continue est bloqué, consistant essentiellement:

a) à redresser la surtension de commutation développée quand chaque thyristor est bloqué;

b) à emmagasiner l'énergie de surtension de commutation redresée dans un condensateur C₁;

c) à restituer une énergie de surtension de commutation emmagasinée aux bornes de la source de courant continu (3A, 3B) dudit onduleur par l'intermédiaire d'une réactance en courant continu (Lr₁, Lr₂),

d) à recharger une énergie magnétique emmagasinée dans la réactance (Lr₁, Lr₂) dans le condensateur (C₁) par des diodes (D₈, D₉), caractérisé en ce qu'il consiste en outre:

e) à comparer la surtension de commutation emmagasinée avec ladite tension de source continue,

f) à restituer l'énergie de surtension de commutation emmagasinée par des thyristors à blocage par grille (G₇, G₈) si la surtension de commutation emmagasinée dépasse une valeur prédéterminée au-delà de ladite tension de source continue,

g) à recharger l'énergie magnétique emmagasinée si la surtension de commutation emmagasinée décroît jusqu'à la valeur prédéterminée au-dessous de ladite tension de source continue.

2. Circuit d'onduleur connecté en pont à thyristors (GTO) à blocage par grille du type à courant pour attaquer un moteur à induction, comportant:

a) un redresseur (1) connecté en pont à thyristors destiné à former une tension de source continue pour ledit onduleur (3);

b) un redresseur (5) de surtension de commutation connecté en pont à diodes, connecté audit onduleur (3) connecté en pont à GTO;

c) un condensateur (C₁) connecté audit redresseur (5) de surtension de commutation connecté en pont à diodes pour emmagasiner une énergie de surtension de commutation développée lorsque chacun des thyristors dudit onduleur connecté en pont GTO (3) est bloqué;

d) une réactance cumulative (Lr₁, Lr₂) compre-

nant un premier enroulement (Lr$_1$) dont un côté positif est connecté à une borne positive dudit onduleur et un second enroulement (Lr$_2$) dont un côté négatif est connecté à une borne négative dudit onduleur;

e) une première diode (D$_8$) dont l'anode est connectée au côté positif du second enroulement (Lr$_2$) de ladite réactance (Lr$_1$, Lr$_2$) et dont la cathode est connecté au côté positif dudit condensateur (C$_1$) et

f) une seconde diode (D$_9$) dont l'anode est connectée au côté négatif dudit condensateur (C$_1$) et dont la cathode est connectée au côté négatif du premier enroulement (Lr$_1$) de ladite réactance (Lr$_1$, Lr$_2$),

de manière que l'énergie de surtension de commutation emmagasinée dans ledit condensateur (C$_1$) soit restituée périodiquement auxdites bornes de courant continu (3A, 3B) dudit onduleur (3) et

de manière que l'énergie magnétique emmagasinée dans le premier et le second enroulement de ladite réactance (Lr$_1$, Lr$_2$) soit rechargée en ledit condensateur (C$_1$) par lesdites première et seconde diodes (D$_8$, D$_9$) après chaque opération de restitution de l'énergie de surtension de commutation, caractérisé par:

g) un premier thyristor à blocage par grille (G$_7$) dont une cathode est connectée à un côté négatif du premier enroulement (Lr$_1$) de ladite réactance (Lr$_1$, Lr$_2$) et dont une anode est connectée à un côté positif dudit condensateur (C$_1$), ledit premier thyristor à blocage par grille (G$_7$), étant débloqué pendant que la tension chargée dans ledit condensateur (C$_1$) dépasse une valeur prédéterminée au-delà de ladite tension de source continue; et

h) un second thyristor à blocage par grille (G$_8$) dont une cathode est connectée à un côté négatif dudit condensateur (C$_1$) et dont une anode est connectée à un côté positif du second enroulement (Lr$_2$) de ladite réactance (Lr$_1$, Lr$_2$), ledit second thyristor à blocage par grille (G$_8$) étant débloqué quand la tension chargée dans ledit condensateur (C$_1$) dépasse une valeur prédéterminée au-delà de ladite tension de source continue,

de manière que l'énergie de surtension de ·commutation emmagasinée dans ledit condensateur (C$_1$) soit restituée par ledit premier et ledit second thyristor à blocage par grille (G$_7$, G$_8$) quand la tension accumulée dans le condensateur dépasse une valeur prédéterminée au-delà de ladite tension de source continue et qu'en outer l'énergie magnétique emmagasinée dans le premier et le second enroulement (Lr$_1$, Lr$_2$) de ladite réactance (Lr$_1$, Lr$_2$) soit rechargée après le blocage dudit premier et dudit second thyristor à blocage par grille (G$_7$, G$_8$).

3. Circuit onduleur connecté en pont à thyristors GTO à blocage par grille du type à courant selon la revendication 2 dans lequel la réactance à courant continu est connectée entre ledit redresseur (1) et ledit onduleur (3), caractérisé par:

i) la réactance en courant continu est une seule réactance.

4. Circuit onduleur connecté en pont à thyristors GTO à blocage par grille du type à courant destiné à attaquer un moteur à induction, selon la revendication 2 ou la revendication 3, caractérisé par:

j) ledit premier thyristor à blocage par grille (G$_7$) est débloqué pendant des intervalles d'état permanent de commutation de l'onduleur et bloqué pendant des intervalles d'état transitoire de la commutation de l'onduleur,

k) ledit second thyristor à blocage par grille (G$_8$) est débloqué pendant des intervalles d'état permanent de la commutation de l'onduleur et bloqué pendant les intervalles d'état transitoire de commutation de l'onduleur;

l) un troisième thyristor à blocage par grille (G$_9$) dont une anode est connectée au côté positif dudit condensateur (C$_1$) et dont une cathode est connectée au côté positif dudit second enroulement (Lr$_2$) de ladite réactance (Lr$_1$, Lr$_2$), ledit troisième thyristor à blocage par grille (G$_9$) étant débloqué pendant que la tension chargée dans ledit condensateur (C$_1$) dépasse une valeur prédéterminée,

m) un quatrième thyristor à blocage par grille (G$_{10}$) dont une anode est connectée au côté négatif dudit premier enroulement (Lr$_1$) de ladite réactance (Lr$_1$, Lr$_2$) et dont une cathode est connectée au côté négatif dudit condensateur (C$_1$), ledit quatrième thyristor à blocage par grille (G$_{10}$) étant débloqué pendant que la tension chargée dans ledit condensateur (C$_1$) dépasse une valeur prédéterminée,

n) une troisième diode (D$_{12}$) dont une anode est connectée au côté négatif dudit premier enroulement (Lr$_1$) de ladite réactance (Lr$_1$, Lr$_2$) et dont une cathode est connecté au côté positif dudit condensateur (C$_1$); et

o) une quatrième diode (D$_{13}$) dont une anode est connectée au côté négatif dudit condensateur (C$_1$) et dont une cathode est connectée au côté positif dudit second enroulement (Lr$_2$) de ladite réactance (Lr$_1$, Lr$_2$),

de manière que l'énergie de surtension de commutation emmagasinée dans ledit condensateur (C$_1$) dans une opération de freinage du moteur soit regénérée sur le côté de source alternative dudit onduleur (3) par ledit premier et ledit quatrième thyristor à blocage par grille (G$_9$, G$_{10}$) quand la tension aux bornes du condensateur (C$_1$) dépasse une valeur prédéterminée, et que l'énergie magnétique emmagasinée dans ladite réactance (Lr$_1$, Lr$_2$) dans une opération de freinage du moteur soit rechargée dans ledit condensateur (C$_1$) par ladite troisième et ladite quatrième diode (D$_{12}$ et D$_{13}$) après le blocage dudit troisième et dudit quatrième thyristor à blocage par grille (G$_9$, G$_{10}$).

FIG. I

( PRIOR ART )

# FIG. 2

MODE I | MODE II | MODE III

$G_1$ gate pulse 0

ON

OFF

$G_6$ gate pulse 0

ON

$G_3$ gate pulse 0

ON

$e_{C1}$ 0

$\begin{pmatrix} e_{C2} \\ e_{C3} \end{pmatrix}$ +
0

$e_{C2}, e_{C3}$

STEADY —— TRANSIENT —— STEADY

$i_u$

$\begin{pmatrix} i_u \\ i_v \end{pmatrix}$ 0

$i_v$

$i_d$

$T_1, T_2$ gate pulse 0

ON

( $V_{UV}$ )

SINE WAVE

( $V_{VW}$ )

( $V_{WU}$ )

# FIG.3

# FIG. 4A

|  |  |
|---|---|
| (IV) Reverse Braking | (I) Normal Driving |
| (III) Reverse Driving | (II) Normal Braking |

$-\omega_r$ ... $\omega_r$ ... T

# FIG. 4B

|  | Torque (T) | Rotor Frequency ($\omega_r$) |
|---|---|---|
| (I) | + | + |
| (II) | − | + |
| (III) | − | − |
| (IV) | + | − |

# FIG. 4C

Normal Driving — Braking

I → ← II → ← III

Reverse Driving

$+\omega_r^*$

$t_1$ ... t

$-\omega_r^*$

4

# FIG. 5